# EUROPÄISCHE PATENTSCHRIFT

(11) **EP 1 567 811 B1**
(45) Veröffentlichungstag und Bekanntmachung des Hinweises auf die Patenterteilung: **10.05.2006**
(21) Anmeldenummer: 03780052.1
(22) Anmeldetag: 25.11.2003
(51) Int. Cl.: F24F 12/00, F24F 5/00

(54) **VERFAHREN UND VORRICHTUNG ZUM KÜHLEN VON UMLUFT**
METHOD AND DEVICE FOR COOLING CIRCULATING AIR
PROCEDE ET DISPOSITIF DE REFROIDISSEMENT D'AIR CIRCULANT

(30) Priorität: 27.11.2002 DE 10255530
(43) Veröffentlichungstag der Anmeldung: 31.08.2005
(73) Patentinhaber: Hovalwerk AG, 9490 Vaduz (LI)
(72) Erfinder: BECK, Edgar, FL-9496 Balzers (LI); STEINHÄUSLER, Christoph, A-4816 Gschwandt (AT)
(74) Vertreter: Schmidt, Frank-Michael
(86) Internationale Anmeldenummer: PCT/EP2003/013243
(87) Internationale Veröffentlichungsnummer: WO 2004/048859

(56) Entgegenhaltungen:
- WO-A-00/46554
- WO-A-01/20236
- DE-A- 4 135 431

## Beschreibung

Die Erfindung betrifft ein Verfahren und eine Vorrichtung zum Kühlen von Umluft im Wärmeaustausch mit adiabat gekühlter Prozeßluft.

Die Erfindung liegt auf dem Gebiet der sogenannten indirekten adiabaten Kühlung, da das für die adiabate Kühlung erforderliche Wasser nicht in die Umluft eingebracht wird, sondern in die Prozeßluft, bei der es sich bevorzugt um Außenluft handelt. Die adiabat gekühlte Prozeßluft tritt als Enthalpie-Senke in Wärmeaustausch mit der Umluft und senkt deren Temperatur.

Die Kühlleistung derartiger Systeme hängt von der Ausgangstemperatur und -feuchte der Prozeßluft ab. Ist z.B. diese Temperatur relativ hoch, reicht die Kühlleistung nicht aus, die Umluft wirksam zu kühlen. Bisher ist man daher gezwungen, eine zusätzliche Kompressions- oder Absorptionskälteanlage einzusetzen , siehe z.B. Dokument DE 41 35 431 A1.

Derartige Kälteanlagen erhöhen den vorrichtungstechnischen Aufwand. Sie verbrauchen hochwertige Energie in Form von elektrischem Strom oder fossilen Brennstoffen und arbeiten darüber hinaus mit umweltbelastendem Kältemitteln. Vermehrt sind gesetzliche Bestimmungen erforderlich, die den Verbrauch von hochwertiger Energie und die Verwendung umweltbelastender Stoffe reglementieren.

Der Erfindung liegt die Aufgabe zugrunde, die Effizienz der indirekten adiabaten Umluftkühlung mit einfachen Mitteln zu steigern.

Zur Lösung dieser Aufgabe ist das eingangs genannte Verfahren erfindungsgemäß dadurch gekennzeichnet, daß die gekühlte Prozeßluft nach ihrem Wärmeaustausch mit der Umluft Wärme aus der ungekühlten Prozeßluft aufnimmt.

Nach ihrem Wärmeaustausch mit der Umluft weist die gekühlte Prozeßluft eine Temperatur auf, die unter der Temperatur der ungekühlten Prozeßluft liegt. Sie kann also aus der ungekühlten Prozeßluft Wärme aufnehmen, so daß deren Temperatur sinkt. Die adiabate Kühlung wirkt also auf eine Prozeßluft ein, deren Temperatur bereits abgesenkt ist. Dies kommt der Kühlung der Umluft zugute, und zwar mit dem Ergebnis, daß - bei Anwendungen, in welchen die sensible Kühlung der Umluft ausreichend ist - auf zusätzliche Kompressions- oder Absorptionskälteanlagen verzichtet werden kann. Der hierfür erforderliche apparatetechnische Aufwand ist gering. Auch sinken neben den Investitionskosten die Betriebskosten, da weniger Energie und weniger Wasser verbraucht wird.

Hervorzuheben ist ferner, daß für den Betrieb der Kühlanlage kein Bewilligungsverfahren erforderlich ist. Die Wartung vereinfacht sich, weil kein Kältespezialist hinzugezogen werden muß. Auch entfällt jegliche auf den Einsatz von Kältemitteln zurückzuführende Umweltbelastung.

Die adiabate Kühlung der Prozeßluft kann erfolgen, bevor die Prozeßluft in Wärmeaustausch mit der Umluft tritt. Man kann dann von einer zweistufigen Verdunstung sprechen. Vorteilhafter kann eine einstufige Verdunstung sein, wobei die adiabate Kühlung der Prozeßluft beim Wärmeaustausch mit der Umluft erfolgt. Im Gegensatz zur zweistufigen Verdunstung kommt es hierbei zu einer Benetzung der Wärmeaustauschflächen mit dem eingespritzten Wasser.

Je nach Betriebszustand kann sich die Wassertemperatur während der einstufigen adiabaten Kühlung ändern. Überraschenderweise wurde gefunden, daß hieraus wesentliche Auswirkungen auf die Verfahrensführung resultieren. Sinkt die Wassertemperatur, ist es vorteilhaft, die Umluft und die Prozeßluft bei ihrem Wärmeaustausch in Gleichstromschaltung zu führen. Anderenfalls ist die Gegenstromschaltung günstiger. In Weiterbildungen der Erfindung wird daher vorgeschlagen, die Umluft und die Prozeßluft bei ihrem Wärmeaustausch entweder im Gleich-, Gegen- oder Kreuzstrom bzw. im Kreuzgleich- oder -gegenstrom zu führen.

Die Kühlleistung ist vorzugsweise durch Variation der Massenstromverhältnisse Umluft/Prozeßluft und/oder durch Variation der in die Prozeßluft eingebrachten Wassermenge regelbar.

Die gekühlte Prozeßluft wird vorzugsweise abgesaugt, nachdem sie Wärme aus der ungekühlten Prozeßluft aufgenommen hat.

Die Vorrichtung zur Lösung der gestellten Aufgabe weist eine erste Wärmeaustauscheinrichtung, die mit der Umluft und mit Prozeßluft beschickbar ist, sowie eine Befeuchtungseinrichtung zum Einbringen von Wasser in die Prozeßluft auf und ist erfindungsgemäß gekennzeichnet durch eine zweite Wärmeaustauscheinrichtung zum Wärmeaustausch zwischen der ungekühlten Prozeßluft vor deren Eintritt in die erste Wärmeaustauscheinrichtung und der gekühlten Prozeßluft nach deren Austritt aus der ersten Wärmeaustauscheinrichtung. Die Prozeßluft durchströmt also erst die zweite Wärmeaustauscheinrichtung und sodann die erste Wärmeaustauscheinrichtung, woraufhin sie durch die zweite Wärmeaustauscheinrichtung abgeleitet wird. In der zweiten Wärmeaustauscheinrichtung nimmt die gekühlte Prozeßluft Wärme aus der ungekühlten Prozeßluft auf und senkt dadurch deren Temperatur.

Vorteilhafterweise ist die zweite Wärmeaustauscheinrichtung mindestens auf der Eintrittsseite der ungekühlten Prozeßluft über einen Bypass umgehbar, und zwar für den Fall, daß die Temperatur der ungekühlten Prozeßluft deren Vorab-Kühlung in der zweiten Wärmeaustauscheinrichtung überflüssig macht. Unter diesem Gesichtspunkt ist auch die Befeuchtungseinrichtung vorteilhafterweise abschaltbar. Schließlich besteht eine bevorzugte Möglichkeit darin, mit sogenannter freier Kühlung zu arbeiten, wobei die Außenluft zur direkten Raumkühlung eingesetzt wird.

Die Befeuchtungseinrichtung kann als Wäscher, Kontaktbefeuchter, Hochdruckbefeuchter oder dergleichen ausgebildet sein. Sie kann sich zwischen der ersten und der zweiten Wärmeaustauscheinrichtung befinden. Diese Art der Anordnung kann, wie erwähnt, als zweistufige Verdunstung bezeichnet werden. Vorteilhafter ist unter Umständen die einstufige Verdunstung, bei der die Befeuchtungseinrichtung in die erste Wärmeaustauscheinrichtung integriert ist. Das Wasser wird also direkt in die erste Wärmeaustauscheinrichtung eingespritzt und benetzt deren Wärmeaustauschflächen.

Vorzugsweise ist die erste Wärmeaustauscheinrichtung dabei im Gegen-, Gleich- oder Kreuzstrom betreibbar, je nachdem, ob sich die Temperatur des Wassers bei der adiabaten Kühlung erhöht oder vermindert.

In wesentlicher Weiterbildung der Erfindung wird vorgeschlagen, daß die erste Wärmeaustauscheinrichtung mindestens zwei Kreuzstromwärmeaustauscher aufweist, wobei auch diese bevorzugt im Kreuzgegen- oder -gleichstrom betreibbar sind.

Vorteilhafterweise wird die Prozeßluft von einem Gebläse abgesaugt, welches im Wege der gekühlten Prozeßluft stromab der zweiten Wärmeaustauscheinrichtung angeordnet ist. Das Gebläse saugt also die Prozeßluft durch die Vorrichtung hindurch. Dabei ist die Anordnung so getroffen, daß die durch das Gebläse zwangsläufig erzeugte Erwärmung der Prozeßluft die Kühlleistung nicht beeinträchtigt.

Die Erfindung wird im folgenden anhand eines bevorzugten Ausführungsbeispiels im Zusammenhang mit der beiliegenden Zeichnung näher erläutert. Die Zeichnung zeigt in:
Figur 1 eine erfindungsgemäße Vorrichtung in schematischer Darstellung;
Figur 2 die Zustandsänderungen der Umluft und der Prozeßluft im h,x-Diagramm.

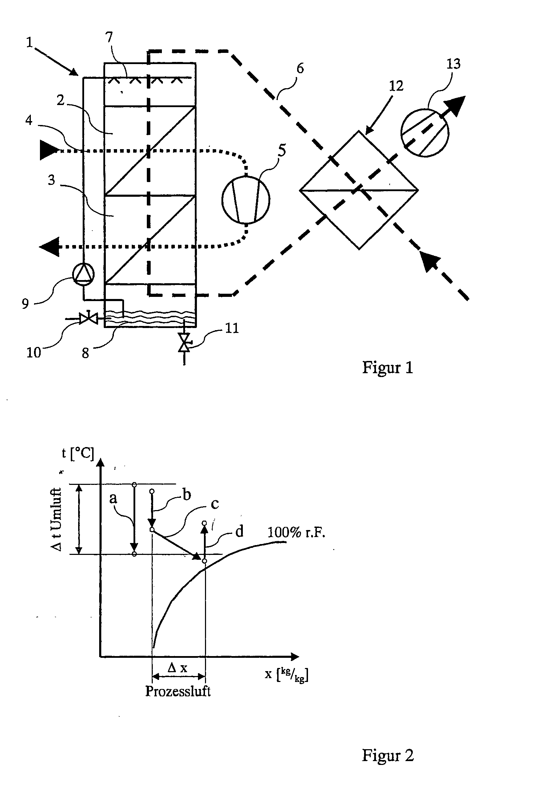

Nach Figur 1 ist eine erste Wärmeaustauscheinrichtung 1 vorgesehen, die zwei Kreuzstromwärmeaustauscher 2 und 3 enthält. Die erste Wärmeaustauscheinrichtung 1 wird mit Umluft 4 beaufschlagt, und zwar durchströmt diese erst den Kreuzstromwärmeaustauscher 2 und sodann den Kreuzstromwärmeaustauscher 3. Ein Gebläse 5 sorgt für den Transport der Umluft 4.

Die erste Wärmeaustauscheinrichtung 1 wird ferner mit Prozeßluft 6 beaufschlagt, bei der es sich im vorliegenden Fall um Außenluft handelt. Auch die Prozeßluft 6 durchströmt erst den Kreuzstromwärmeaustauscher 2 und sodann den Kreuzstromwärmeaustauscher 3. Die erste Wärmeaustauscheinrichtung 1 arbeitet also in Kreuzgleichstromschaltung, was deshalb vorteilhaft ist, weil der Betriebszustand der Vorrichtung zu einer Abkühlung des in die erste Wärmeaustauscheinrichtung 1 eingespritzten Wassers führt.

Die erste Wärmeaustauscheinrichtung 1 ist hierzu mit einer Befeuchtungseinrichtung 7 versehen, die das Wasser in die Prozeßluft 6 einsprüht und auf diese Weise deren adiabate Kühlung bewirkt. Das Wasser sammelt sich in einem Sumpf 8 und wird von einer Pumpe 9 der Befeuchtungseinrichtung 7 zugeführt. Der Sumpf 8 ist mit einem Wasserzulauf 10 und einem Wasserablauf 11 versehen.

Vor Eintritt in die erste Wärmeaustauscheinrichtung 1 und nach Austritt aus dieser durchströmt die Prozeßluft 6 eine zweite Wärmeaustauscheinrichtung 12, und zwar unter der Wirkung eines Gebläses 13, das, bezogen auf die gekühlte Prozeßluft, stromab der zweiten Wärmeaustauscheinrichtung 12 angeordnet ist. Die vom Gebläse 13 erzeugte Wärme kann die Kühlleistung nicht beeinträchtigen. Da die Temperatur der gekühlten Prozeßluft 6 nach Austritt aus der ersten Wärmeaustauscheinrichtung 1 niedriger ist als die Temperatur der Prozeßluft 6 vor Eintritt in die zweite Wärmeaustauscheinrichtung 12, kann in letzterer ein Wärmeaustausch zwischen den beiden Strömen der Prozeßluft 6 erfolgen, und zwar mit dem Ergebnis, daß die Prozeßluft 6 bereits mit erniedrigter Temperatur der adiabaten Kühlung unterworfen wird. Eine entsprechende Erhöhung der Kühlleistung ist die Folge.

Figur 2 zeigt im h,x-Diagramm ein Beispiel für eine einstufige adiabate Kühlung, wie sie mit der Vorrichtung nach Figur 1 durchführbar ist, wobei eine Linie a die Temperatursenkung der Umluft 4 in der ersten Wärmeaustauscheinrichtung 1 wiedergibt. Eine Linie b zeigt diejenige Temperatursenkung, die die Prozeßluft 6 in der zweiten Wärmeaustauscheinrichtung 12 erfährt. Eine Linie c gibt die Temperatursenkung der Prozeßluft 6 durch die adiabate Kühlung in der ersten Wärmeaustauscheinrichtung 1 wieder, und eine Linie d zeigt die Temperaturerhöhung der Prozeßluft 6 in der zweiten Wärmeaustauscheinrichtung 12.

Im Rahmen der Erfindung sind durchaus Abwandlungsmöglichkeiten gegeben. So kann die Förderrichtung des Gebläses 5 umgekehrt werden. Die erste Wärmeaustauscheinrichtung 1 arbeitet dann in Kreuzgegenstromschaltung. Diese Arbeitsweise wird man wählen, wenn die Wassertemperatur zwischen dem Prozeßluftein- und -austritt nicht sinkt. Ferner besteht die Möglichkeit, die Befeuchtungseinrichtung von der ersten Wärmeaustauscheinrichtung abzukoppeln und zwischen den beiden Wärmeaustauscheinrichtungen arbeiten zu lassen. Die Integration der Befeuchtungseinrichtung in die erste Wärmeaustauscheinrichtung ist allerdings besonders vorteilhaft. Die erste Wärmeaustauscheinrichtung kann einstufig ausgebildet sein, wie auch die zweite Wärmeaustauscheinrichtung einen mehrstufigen Aufbau aufweisen kann. Im übrigen besteht die Möglichkeit, die zweite Wärmeaustauscheinrichtung mit einem Bypass zu umgehen, wodurch im Diagramm nach Figur 2 die Linien b und d in Fortfall kommen. Schaltet man außerdem, was ebenfalls möglich ist, die Befeuchtungseinrichtung 7 ab, so entfällt auch noch die Linie c. Der Kühleffekt resultiert dann lediglich aus der Temperaturdifferenz zwischen Umluft und Prozeßluft. Schließlich kann auch noch die erste Wärmeaustauscheinrichtung abgekoppelt werden. Die Prozeßluft wird sodann in den zu kühlenden Raum direkt eingeblasen.

## Patentansprüche

1. Verfahren zum Kühlen von Umluft im Wärmeaustausch mit adiabat gekühlter Prozeßluft,
**dadurch gekennzeichnet,**
**daß** die gekühlte Prozeßluft nach ihrem Wärmeaustausch mit der Umluft Wärme aus der ungekühlten Prozeßluft aufnimmt.

2. Verfahren nach Anspruch 1, **dadurch gekennzeichnet, daß** die adiabate Kühlung der Prozeßluft einstufig beim Wärmeaustausch mit der Umluft erfolgt.

3. Verfahren nach Anspruch 1, **dadurch gekennzeichnet, daß** die Umluft und die Prozeßluft bei ihrem Wärmeaustausch im Gleich-, Gegen- oder Kreuzstrom geführt werden.

4. Verfahren nach Anspruch 1, **dadurch gekennzeichnet, daß** die Umluft und die Prozeßluft bei ihrem Wärmeaustausch im Kreuzgleich- oder Kreuzgegenstrom durch zwei Kreuzstromwärmetauscher (2,3) geführt werden.

5. Verfahren nach Anspruch 1, **dadurch gekennzeichnet, daß** die Kühlleistung durch Variation des Massenstromverhältnisses Umluft/Prozeßluft geregelt wird.

6. verfahren nach Anspruch 1, **dadurch gekennzeichnet, daß** die Kühlleistung durch Variation der in die Prozeßluft eingebrachten Wassermenge geregelt wird.

7. Verfahren nach Anspruch 1, **dadurch gekennzeichnet, daß** die gekühlte Prozeßluft abgesaugt wird, nachdem sie Wärme aus der ungekühlten Prozeßluft aufgenommen hat.

8. Vorrichtung zum Kühlen von Umluft (4) mit einer ersten Wärmeaustauscheinrichtung (1), die mit der Umluft (4) und mit Prozeßluft (6) beschickbar ist, und mit einer Befeuchtungseinrichtung (7) zum Einbringen von Wasser in die Prozeßluft (6),
**gekennzeichnet durch**
eine zweite wärmeaustauscheinrichtung (12) zum Wärmeaustausch zwischen der ungekühlten Prozeßluft (6) vor deren Eintritt in die erste wärmeaustauscheinrichtung (1) und der gekühlten Prozeßluft (6) nach deren Austritt aus der ersten Wärmeaustauscheinrichtung (1).

9. Vorrichtung nach Anspruch 8, **dadurch gekennzeichnet, daß** die zweite Wärmeaustauscheinrichtung (12) mindestens auf der Eintrittsseite der ungekühlten Prozeßluft (6) über einen Bypass umgehbar ist.

10. Vorrichtung nach Anspruch 8, **dadurch gekennzeichnet, daß** die Befeuchtungseinrichturig (7) abschaltbar ist.

11. Vorrichtung nach Anspruch 8, **dadurch gekennzeichnet, daß** die Befeuchtungseinrichtung (7) in die erste Wärmeaustauscheinrichtung (1) integriert ist.

12. Vorrichtung nach Anspruch 8, **dadurch gekennzeichnet, daß** die erste Wärmeaustauscheinrichtung (1) im Gleich-, Gegen- oder Kreuzstrom betreibbar ist.

13. Vorrichtung nach Anspruch 8, **dadurch gekennzeichnet, daß** die erste Wärmeaustauscheinrichtung (1) mindestens zwei Kreuzstromwärmeaustauscher (2,3) aufweist.

14. Vorrichtung nach Anspruch 13, **dadurch gekennzeichnet, daß** die erste wärmeaustauscheinrichtung (1) im Kreuzgleich- oder Kreuzgegenstrom betreibbar ist.

15. Vorrichtung nach Anspruch 8, **gekennzeichnet durch** ein im Wege der gekühlten Prozeßluft (6) stromab der zweiten Wärmeaustauscheinrichtung (12) angeordnetes Gebläse (13) zum Absaugen der Prozeßluft (6).

## Claims

1. A method of cooling circulating air by means of heat exchange with adiabatically cooled process air,
**characterised in that**
after its heat exchange with the circulating air, the cooled process air absorbs heat from the uncooled process air.

2. A method as claimed in Claim 1, **characterised in that** the adiabatic cooling of the process air is effected in a single stage in the heat exchange with the circulating air.

3. A method as claimed in Claim 1, **characterised in that** the circulating air and the process air are conducted in co-current, counter-current or cross-current in the heat exchange process.

4. A method as claimed in Claim 1, **characterised in that** the circulating air and the process air are conducted in cross-co-current or cross-counter-current through two cross-flow heat exchangers (2, 3) in the heat exchange process.

5. A method as claimed in Claim 1, **characterised in that** the cooling performance is controlled by variation of the circulating air/process air mass flow ratio.

6. A method as claimed in Claim 1, **characterised in that** the cooling performance is controlled by variation of the amount of water introduced into the process air.

7. A method as claimed in Claim 1, **characterised in that** the cooled process air is exhausted after it has absorbed heat from the uncooled process air.

8. Apparatus for cooling circulating air (4) including a first heat exchanger device (1), which may be fed with the circulating air (4) and with process air (6), and a moistening device (7) for introducing water into the process air (6),
**characterised by**
a second heat exchanger device (12) for heat exchange between the uncooled process air (6) before its entry into the first heat exchanger device (1) and the cooled process air (6) after its discharge from the first heat exchanger device (1).

9. Apparatus as claimed in Claim 8, **characterised in that** the second heat exchanger device (12) may be bypassed, at least on the inlet side of the uncooled process air (6), via a bypass.

10. Apparatus as claimed in Claim 8, **characterised in that** the moistening device (7) may be switched off.

11. Apparatus as claimed in Claim 8, **characterised in that** the moistening device (7) is integrated into the first heat exchanger device (1).

12. Apparatus as claimed in Claim 8, **characterised in that** the first heat exchanger device (1) is operable in co-current, counter-current or cross-current.

13. Apparatus as claimed in Claim 8, **characterised in that** the first heat exchanger device (1) includes at least two cross-current heat exchangers (2, 3).

14. Apparatus as claimed in Claim 13, **characterised in that** the first heat exchanger device (1) is operable in cross-co-current or cross-counter current.

15. Apparatus as claimed in Claim 8, **characterised by** a blower (13) for exhausting the process air (6) arranged in the pathway of the cooled process air (6) downstream of the second heat exchanger device (12).

## Revendications

1. Procédé pour refroidir de l'air en circulation en échange thermique avec de l'air de processus refroidi de manière adiabatique,
**caractérisé en ce que**
l'air de processus refroidi reçoit la chaleur provenant de l'air de processus non refroidi après son échange thermique avec l'air en circulation.

2. Procédé selon la revendication 1, **caractérisé en ce que** le refroidissement adiabatique de l'air de processus s'effectue en une étape lors de l'échange thermique avec l'air en circulation.

3. Procédé selon la revendication 1, **caractérisé en ce que** l'air en circulation et l'air de processus sont guidés au cours de leur échange thermique dans un courant de même sens, de sens contraire ou croisé.

4. Procédé selon la revendication 1, **caractérisé en ce que** l'air en circulation et l'air de processus sont guidés à travers deux échangeurs de chaleur (2, 3) au cours de leur échange thermique dans un courant croisée de même sens ou de sens contraire.

5. Procédé selon la revendication 1, **caractérisé en ce que** la puissance de refroidissement est régulée par variation du rapport de débit massique entre l'air en circulation et l'air de processus.

6. Procédé selon la revendication 1, **caractérisé en ce que** la puissance de refroidissement est régulée par variation de la quantité d'eau introduite dans l'air de processus.

7. Procédé selon la revendication 1, **caractérisé en ce que** l'air de processus refroidi est aspiré après qu'il a reçu de la chaleur de l'air de processus non refroidi.

8. Dispositif de refroidissement d'air en circulation (4) comprenant un premier dispositif d'échange de chaleur (1) qui peut être alimenté en air en circulation (4) et en air de processus (6), et comprenant un dispositif d'humidification (7) pour l'introduction d'eau dans l'air de processus (6),
**caractérisé par**
un deuxième dispositif d'échange de chaleur (12) pour l'échange de chaleur entre l'air de processus non refroidi (6) avant son entrée dans le premier dispositif d'échange de chaleur (1) et l'air de processus refroidi (6) après sa sortie du premier dispositif d'échange de chaleur (1).

9. Dispositif selon la revendication 8, **caractérisé en ce que** le deuxième dispositif d'échange de chaleur (12) peut être contourné par une dérivation au moins du côté de l'entrée de l'air de processus non refroidi (6).

10. Dispositif selon la revendication 8, **caractérisé en ce que** le dispositif d'humidification (7) peut être déconnecté.

11. Dispositif selon la revendication 8, **caractérisé en ce que** le dispositif d'humidification (7) est intégré dans le premier dispositif d'échange de chaleur (1).

12. Dispositif selon la revendication 8, **caractérisé en ce que** le premier dispositif d'échange de chaleur (1) peut fonctionner dans un courant de même sens, de sens contraire ou croisé.

13. Dispositif selon la revendication 8, **caractérisé en ce que** le premier dispositif d'échange de chaleur (1) présente au moins deux échangeurs de chaleur à courant croisé (2, 3).

14. Dispositif selon la revendication 13, **caractérisé en ce que** le premier dispositif d'échange de chaleur (1) peut fonctionner dans un courant croisé de même sens ou de sens contraire.

15. Dispositif selon la revendication 8, **caractérisé par** une soufflante (13) pour l'aspiration de l'air de processus (6) disposée dans le courant de l'air de processus refroidi (6) en aval du deuxième dispositif d'échange de chaleur (12).
